# EUROPEAN PATENT APPLICATION

(11) **EP 2 410 479 A1**
(43) Date of publication of application: **25.01.2012**
(21) Application number: 10007527.4
(22) Date of filing: 20.07.2010
(51) Int. Cl.: G06Q 20/00

(54) **Method of credit card transaction authorization using VolPoW phone**

(71) Applicant: WU, You-Jhang, Xinyi Taipei City 110 (TW)
(72) Inventor: Yang, Wallace, Taichung City (TW)
(74) Representative: Zeitler - Volpert - Kandlbinder

(57) **Abstract**

A method of credit card transaction authorization using VoIPoW phone is provided. Since VoIPoW phone is independent of environmental barriers, time as well as space limitations and communication costs, this method efficiently and economically performs authorization by both recognizing a credit card and identifying a holder of the credit card. In addition, real-time intercommunication between a card holder and a relevant card issuing bank through VoIPoW phone can prevent the card from unauthorized use, thereby effectively precluding credit card fraud that otherwise happens to the existing authorization mechanism where only credit cards themselves are recognized and holders thereof are not to be identified.

## Description

### BACKGROUND OF THE INVENTION

### 1. Field of the Invention

The present invention relates to authorization methods applied to credit card transactions, and more particularly to a method of credit card transaction authorization using VoIPoW phone.

### 2. Description of the Related Art

Since the introduction of credit cards to the world, the authorization system thereof has presented an innate flaw. That is, during payment authorization, only the cards themselves are recognized and there is no mechanism provided to identify holders of the credit cards.

While the transaction authorization of credit cards mainly take place at those credit-card processors or imprinters provided by the points of sell, such as retailers or vendors authorized by issuing banks, the credit-card processors or imprinters at the points of sell only confirm "whether the present card has enough credit for the current transaction" disregarding the identification of the person who renders this card for processing. With the flaw as described above, credit card fraud has become an increasing and unsolved problem.

Conventionally, card issuing banks typically adopt the following approaches to prevent credit card fraud:
1. The card issuing banks free their card holders from liability and obligation of credit card fraud happening within 24 or 48 hours before the card holders' reporting the cards are lost or stolen.
2. Adoption of smart cards is promoted for better protection of their holders' credit information. However, once information in the chip on a smart card is illegally decoded, the associated card holder is exposed in even higher risk of losing money or personal privacy.
3. The issuing banks use encrypted databases and improved fire walls.
4. During on-line purchase transaction, the card holders are required to provide specific codes or digital IDs in order to improve identification of the card holder.
5. The issuing banks pay extra efforts to monitor on-line authorization and conduct real-time screening.
6. Encryption of ISP databases and strength of fire walls are continuously improved.
7. Accessibility of sensitive information is strictly limited.

However, the foregoing measures are all about internal control and security at the issuing backs' end for preventing credit card fraud, and provide no improvement to the innate flaw of authorization through credit-card processors or imprinters at the points of sell. As a result, compensation for credit card fraud still takes up a considerable part in the budget profiles of the card issuing banks.

While many resourceful measures for preventing credit card fraud have been seen in existing patent literature, these known methods are nevertheless little practical for at least involving the problems of large equipment investment, high operation costs, inconvenient use or even undue invasion of card holders' privacy. Some of prior patents are herein recited for example:
1. US Patent No. 5,509,083 proposed a method and apparatus for confirming the identity of an individual presenting an identification card wherein the identification card has a magnetic strip containing the image of the card holder's fingerprint.
2. US Patent No. 5,538,291 disclosed an anti-theft credit card, wherein the card is divided into two parts and can only work when the two parts are combined.
3. US Patent No. 5,648,647 relates to an anti-fraud credit card dispatch system, wherein only with the presence of the old credit card, a new card can be validated.
4. US Patent No. 5,955,961 provides a programmable transaction card with an IC chip, which prevents credit card fraud through communication with an authorization center while providing important anti-fraud features.
5. US Patent Application Publication No. 20010053239 mentions a credit card fraud elimination system for preventing credit card fraud by prohibiting the unauthorized use of a credit card through verification of the absolute identity of a credit card user.
6. US Patent Application Publication No. 20020046055 introduced a biometric verification system and method for internet services, wherein a card holder's voice-print is verified for on-line transactions.
7. US Patent Application Publication No. 20020099648 describes a method of reducing fraud in credit card and other E-business, wherein approved merchants, approved times, coincident user approval and other criteria established by the user are confirmed in transactions for reducing fraud.

On the other hand, VoIP (Voice over Internet Protocol) phone is known as a telecommunication application where audio data are transmitted through the Internet. It depends on compressing audio signals into data packages by means of VoIP gateways, outputting the same through the Internet, and recombining or converting the same into normal speech sounds.

However, VoIP phone has its limitation in practical use. That is, now that the connection between a computer or a wired telephone and the VoIP network through a wired channel is necessary, wireless transmission of voice is impossible to VoIP.

Phone of VoIP over Wireless (hereinafter referred to as VoIPoW) is another telecommunication application that transmits audio data through the Internet. The technology of VoIPoW has been implemented by the present inventor in his UK Patent No. GB2372909B and materialized as a wireless network telephone set system, which integrates various optical and electrical wireless communication modules of different bandwidths in a wireless environment. This system incorporates techniques of DSP processing, wireless communication, radio transmission, VoIP, mobile communication networking, fiber optic networking, the Internet and wireless internet so as to not only provide the function of VoIP, but also be capable of transmitting voices through the wireless Internet.

VoIPoW phone is advantageous for having high mobility and being not subject to environmental barriers, moving velocity, or transmission distance. Its function of voice transmission is independent of time and space, thereby allowing the differences of time and space between different geographic regions to become "null differences" while requiring almost no communication costs. VoIPoW phone provides not only "real-time" voice transmission service, but also "real-time" connection to any corner in the world. It even surpasses the existing wireless transmission platforms such as 2G, 3G or 3.5G mobile phone systems, Blue Tooth, WiFi and WiMax in wireless communication ability, thus allowing its users to long-distance people without use of the traditional PSTN and significantly cutting down the costs for international phone calls or long-distance calls.

Hence, when a credit card processor has or is associated with the VoIPoW phone function, the credit card processor is enabled to recognize cards and identify card holders. Once a credit card is processed at the card processor, the card processor can synchronously intercommunicate with the card issuing bank through VoIPoW phone so that the card issuing bank can not only "real-time" identify the locale of credit card transaction initiated by the card holder, but also "real-time" ask the card holder through voice communication to confirm the transaction himself/herself. Particularly, the card issuing banks are thereby allowed to prevent credit card fraud with the real-time VoIPoW intercommunication with card holders under a very economic cost frame, thus actually stopping credit card fraud which has been remained unsolved so far to the card issuing banks because the traditional credit card processors only recognize cards but not identify card holders.

### BRIEF SUMMARY OF THE INVENTION

In view of the above, for effectively solving the exiting problem of credit card fraud, it is the objective of the present invention to provide a method of credit card transaction authorization using VoIPoW phone. The present invention make use of the benefits of VoIP over Wireless, such as being independent of environmental barriers, time as well as space limitations and communication costs, to efficiently and economically perform authorization by both recognizing a credit card and identifying a holder of the credit card, thereby preventing stolen or lost credit cards from unauthorized use.

The method of credit card transaction authorization using the present invention VoIPoW phone, including the following steps:
a. providing the credit-card-managing server in the card issuing bank and the authorized VoIPoW card processor that are both capable of fixed-line communication and wireless communication, and are adaptive to VoIPoW phone for receiving and issuing messages of voice or SMS;
b. performing a transaction, wherein when the card holder presents the credit card to the VoIPoW card processor for processing, the method proceeds to Step c, and when the card holder performs the transaction through the Internet, the method proceeds to Step d;
c. establishing a real-time intercommunication between the VoIPoW card processor and the credit-card-managing server of the card issuing bank for the transaction;
d. verifying whether the credit card is valid, and if yes, the method proceeding to Step e; otherwise, the method ending;
e. automatically calling back through VoIPoW phone to confirm the transaction with the card holder, and if the card holder confirms the transaction, the method proceeding to Step f; otherwise, the method ending;
f. verifying whether the stipulated password provided for authorizing payment by the card holder is correct, and if yes, the method proceeding to Step g; otherwise, the method proceeding to Step h; and
g. completing payment authorization for the transaction; or
h. refusing to authorize for the transaction by the card issuing bank.

In case of credit card fraud, the method of credit card transaction authorization using VoIPoW according to the present invention may further comprises a step of immediately reporting the credit card fraud to the police or the governmental financial administration centre to stop said credit card fraud.

### BRIEF DESCRIPTION OF THE DRAWINGS

FIG. 1 is a structural diagram illustrating a method of credit card transaction authorization using VoIPoW phone according to the present invention.
FIG. 2 is a flowchart of the method of credit card transaction authorization using VoIPoW phone according to the present invention.

### DETAILED DESCRIPTION OF THE INVENTION

What is probed into the invention is a method of credit card transaction authorization using VoIPoW phone. Detailed descriptions of the production, structure and elements will be provided in the following in order to make the invention thoroughly understood. Obviously, the application of the invention is not confined to specific details familiar to those who are skilled in the art. On the other hand, the common elements and procedures that are known to everyone are not described in details to avoid unnecessary limits of the invention. Some preferred embodiments of the present invention will now be described in greater detail in the following. However, it should be recognized that the present invention can be practiced in a wide range of other embodiments besides those explicitly described, that is, this invention can also be applied extensively to other embodiments, and the scope of the present invention is expressly not limited except as specified in the accompanying claims.

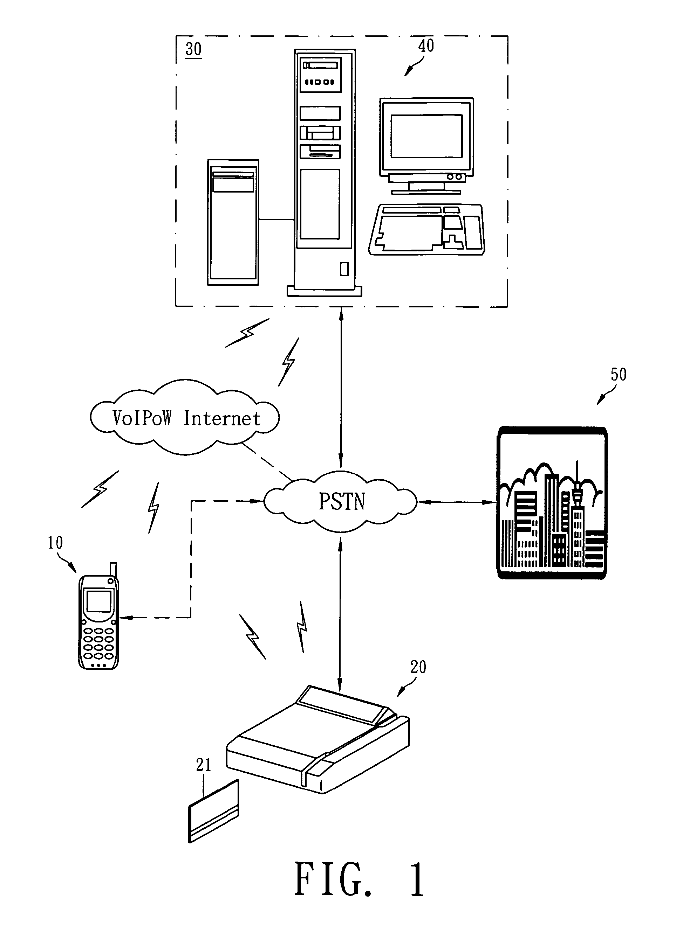

Referring to FIG. 1, the present invention provides a method of credit card transaction authorization using VoIPoW phone, whereby a card holder 10 and a card issuing bank 30 are allowed to intercommunicate through VoIP over Wireless in a real-time manner so as to prevent credit card fraud. Therein, a credit card managing system or server 40 (hereafter defined as the credit-card-managing server 40) of the card issuing bank 30 is equipped with a VoIPoW transmission interface and capable of fixed-line communication and wireless communication, so it can work in an Internet or wireless Internet environment uses a VoIPoW phone to receive or issue messages of voice or SMS. Meantime, a card processor 20 (hereafter defined as the VoIPoW card processor 20) at a retail store or a point of sell authorized by the card issuing bank to legally conduct credit card transactions, in addition to the known functions of existing card processors, is provided with a VoIPoW transmitting interface or is connected to an external device having a VoIPoW transmitting interface, so it is also capable of fixed-line communication and wireless communication and can work in an Internet or wireless Internet environment uses a VoIPoW phone to receive or issue messages of voice or SMS.

The above-mentioned wireless of VoIPoW is selected from at least one of the following: 2G mobile phone system, 3G mobile phone system, 3.5G mobile phone system, 4G mobile phone system, Blue Tooth, WiFi and WiMax.

When a card holder 10 presents its credit card 21 to the VoIPoW card processor 20 for a transaction, the VoIPoW card processor 20 can , in a real-time manner, connect with the credit-card-managing server 40 of the card issuing bank 30 through fixed-line communication or wireless communication. Then the credit-card-managing server 40 verifies whether the credit card 21 is valid. If the credit card 21 is verified as valid, the credit-card-managing server 40 starts to confirm whether the transaction is inspired by the card holder 10 by automatically calling back to the card holder 10 through VoIPoW phone in a real-time manner and intercommunicating with the card holder 10 via a message of voice or SMS or via the wireless communication supported by the VoIPoW card processor 20 receiving the request of transaction. After the card holder 10 replies and confirms the transaction by providing a pre-stipulated password to the card issuing bank 30, the payment transaction is completed. Otherwise, the card issuing bank 30 shall refuse the request of payment and immediately report the police or the governmental financial administration centre to stop credit card fraud.

In the event that the card holder 10 performs a transaction through the Internet, the method is conducted by connecting the credit-card-managing server 40 of the card issuing bank 30 with the card holder 10, and allowing the credit-card-managing server 40 of the card issuing bank 30 to perform the same procedures as discussed previously, which are not to be described herein.

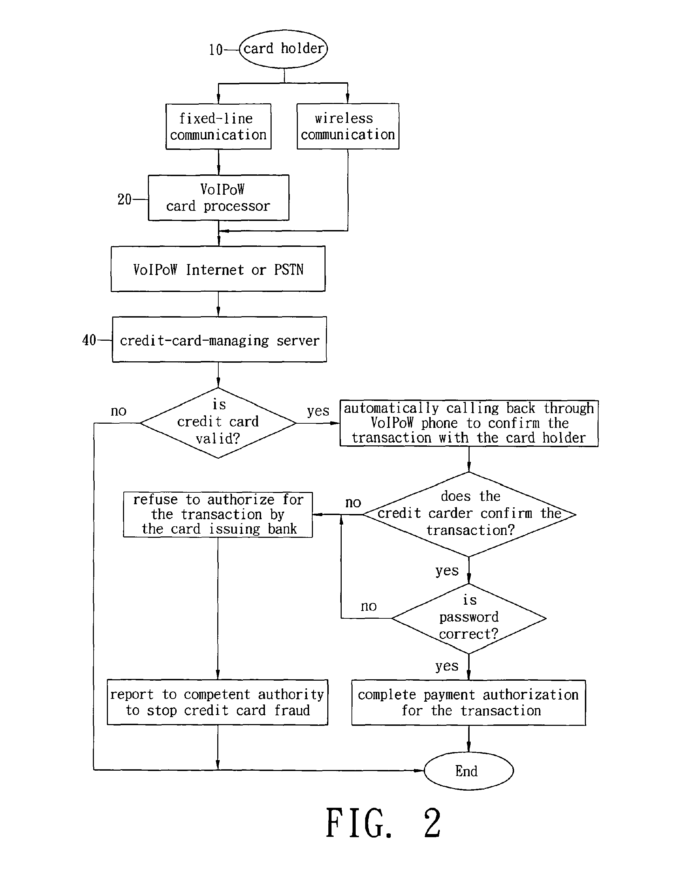

Please refer to FIG. 1 and FIG. 2 for detailed steps of the presently disclosed method of credit card transaction authorization using the present invention VoIPoW phone, including:
a. providing the credit-card-managing server 40 in the card issuing bank 30 and the authorized VoIPoW card processor 20 that are both capable of fixed-line communication and wireless communication, and are adaptive to VoIPoW phone for receiving and issuing messages of voice or SMS;
b. performing a transaction, wherein when the card holder 10 presents the credit card 21 to the VoIPoW card processor 20 for processing, the method proceeds to Step c, and when the card holder 10 performs the transaction through the Internet, the method proceeds to Step d;
c. establishing a real-time intercommunication between the VoIPoW card processor 20 and the credit-card-managing server 40 of the card issuing bank 30 for the transaction;
d. verifying whether the credit card 21 is valid, and if yes, the method proceeding to Step e; otherwise, the method ending;
e. automatically calling back through VoIPoW phone to confirm the transaction with the card holder 10, and if the card holder 10 confirms the transaction, the method proceeding to Step f; otherwise, the method ending;
f. verifying whether the stipulated password provided for authorizing payment by the card holder 10 is correct, and if yes, the method proceeding to Step g otherwise, the method proceeding to Step h; and
g. completing payment authorization for the transaction; or
h. refusing to authorize for the transaction by the card issuing bank 30.

In case of credit card fraud, the method of credit card transaction authorization using VoIPoW according to the present invention may further comprises a step of immediately reporting the credit card fraud to the police or the governmental financial administration centre 50 to stop said credit card fraud.

To sum up, the method of credit card transaction authorization using VoIPoW phone as proposed by the present invention uses the features of VoIPoW that includes being independent of environmental barriers, time as well as space limitations and communication costs, to perform payment authorization of the credit card 10 by both recognizing the credit card 10 and identifying the holder thereof. In the method, the card holder 10 and the card issuing bank 30 intercommunicate in a real-time manner through VoIPoW phone so as to actively prevent credit card fraud. By presenting the outstanding features given below, the present invention effectively precludes credit card fraud that otherwise happens to the existing authorization mechanism where only credit cards themselves are recognized and holders thereof are not to be identified:
1. The present invention helps to stop credit card fraud before the transaction is done, thereby improving financial safety of banks and protecting the rights of all card holders; and
2. By using a 24-hour global automatic dialing and reporting control system, the method of the preset invention can effectively eliminate credit card fraud independent of limitations relating to environments, time and communication costs.

Obviously many modifications and variations are possible in light of the above teachings. It is therefore to be understood that within the scope of the appended claims the present invention can be practiced otherwise than as specifically described herein. Although specific embodiments have been illustrated and described herein, it is obvious to those skilled in the art that many modifications of the present invention may be made without departing from what is intended to be limited solely by the appended claims.

## Claims

1. A method of credit card transaction authorization using the present invention VoIPoW phone, including the following steps:
a. providing the credit-card-managing server in the card issuing bank and the authorized VoIPoW card processor that are both capable of fixed-line communication and wireless communication, and are adaptive to VoIPoW phone for receiving and issuing messages of voice or SMS;
b. performing a transaction, wherein when the card holder presents the credit card to the VoIPoW card processor for processing, the method proceeds to Step c, and when the card holder performs the transaction through the Internet, the method proceeds to Step d;
c. establishing a real-time intercommunication between the VoIPoW card processor and the credit-card-managing server of the card issuing bank for the transaction;
d. verifying whether the credit card is valid, and if yes, the method proceeding to Step e; otherwise, the method ending;
e. automatically calling back through VoIPoW phone to confirm the transaction with the card holder, and if the card holder confirms the transaction, the method proceeding to Step f; otherwise, the method ending;
f. verifying whether the stipulated password provided for authorizing payment by the card holder is correct, and if yes, the method proceeding to Step g; otherwise, the method proceeding to Step h; and
g. completing payment authorization for the transaction; or
h. refusing to authorize for the transaction by the card issuing bank.

2. The method of credit card transaction authorization using VoIPoW as defined in Claim 1, further comprises a step of immediately reporting the credit card fraud to the police or the governmental financial administration centre to stop said credit card fraud.

3. The method of credit card transaction authorization using VoIPoW as defined in Claim 1, wherein the VoIPoW employs at least one wireless transmission platform selected from the following: 2G mobile phone system, 3G mobile phone system, 3.5G mobile phone system, 4G mobile phone system, Blue Tooth, WiFi and WiMax.
